(19) **Europäisches Patentamt**
**European Patent Office**
**Office européen des brevets**

(11) **EP 1 610 454 B1**

(12) **EUROPEAN PATENT SPECIFICATION**

(45) Date of publication and mention
of the grant of the patent:
**07.10.2009 Bulletin 2009/41**

(51) Int Cl.:
*H02P 3/18* *(2006.01)*          *G01R 27/12* *(2006.01)*
*G01R 27/14* *(2006.01)*          *B60L 3/12* *(2006.01)*
*B60L 7/22* *(2006.01)*

(21) Application number: **05090156.0**

(22) Date of filing: **30.05.2005**

(54) **Determining a temperature of a brake resisitor**

Ermittlung der Temperatur eines Bremswiderstandes.

Détermination d'une température d'un resisitor de frein

(84) Designated Contracting States:
**AT BE BG CH CY CZ DE DK EE ES FI FR GB GR HU IE IS IT LI LT LU MC NL PL PT RO SE SI SK TR**

(30) Priority: **23.06.2004 GB 0414051**

(43) Date of publication of application:
**28.12.2005 Bulletin 2005/52**

(73) Proprietor: **Bombardier Transportation GmbH 10785 Berlin (DE)**

(72) Inventor: **Still, Ludwig 64683 Einhausen (DE)**

(74) Representative: **Patentanwälte Bressel und Partner**
**Radickestrasse 48**
**12489 Berlin (DE)**

(56) References cited:
**DE-A1- 10 235 432**          **US-A1- 2002 074 804**

- **PATENT ABSTRACTS OF JAPAN vol. 1998, no. 13, 30 November 1998 (1998-11-30) -& JP 10 225158 A (FUJITEC CO LTD; FUJI ELECTRIC CO LTD), 21 August 1998 (1998-08-21)**
- **PATENT ABSTRACTS OF JAPAN vol. 1996, no. 11, 29 November 1996 (1996-11-29) -& JP 08 196001 A (TOYO ELECTRIC MFG CO LTD), 30 July 1996 (1996-07-30)**

**Description**

The present invention relates to a method and to an arrangement for determining a temperature of a brake resistor, wherein a plurality of consecutive current pulses of the current carried by the brake resistor are generated. More particularly, the invention relates to high-power applications, such as the area of railroad traction vehicles, wherein kinetic energy is transferred into electric energy and wherein the electric energy or part of the electric energy may be dissipated into heat by the brake resistor during braking of the vehicle. The invention also relates to a method and an arrangement for protecting the brake resistor from damage.

For many applications, the electric current carried by the brake resistor is repeatedly switched on and off. Consequently, a diagram, which shows the current as a function of time, comprises a plurality of consecutive current pulses. In practice, the repetition frequency of the pulses may be in the range of small multiples of 10 Hz to 1 kHz. However, the pulse lengths may be varied in order to control the electric power dissipated by the resistor. Furthermore, the current level within a pulse and/or of different pulses may vary.

Due to the significant load, in particular in high-power applications, the temperature of the resistor will rise and it may be destroyed. In order to enhance the transfer of heat from the resistor to its ambient, a cooling fluid may be forced to circulate and to pass the resistor, so that the fluid heats up. However, this will only increase the limit of the electric power which can be dissipated into heat power by the resistor.

It has been proposed to measure the temperature of the resistor using a temperature sensor (such as a thermoelectric couple or a sensor with a temperature-dependent resistance) which is arranged as close as possible to the resistor. In applications, wherein high electric voltages are applied to the brake resistor, the temperature sensor has often direct contact to a high electric potential. In these cases, the temperature sensor is electrically decoupled from the device which is used to evaluate the measurement information from the sensor.

Another approach is to use two different types of material for the brake resistor. A first material is the typical material used for brake resistors. The second material has a very low temperature coefficient. The electric voltage between the two materials is measured and can be used to determine the temperature.

Disadvantages of the approaches described above are:

- An additional device and/or material is/are used in the brake resistor or next to the brake resistor.
- In high-power applications, the additional equipment is used in difficult environment. The effect of the current pulses, high temperatures and possible electric oscillations will decrease the reliability and precision of the measurement.
- The temperature measurement is performed at a single point or in a restricted portion of the brake resistor. Thus, the measurement results may not represent the temperature of the whole brake resistor or of resistor portions with higher temperatures.
- In many cases, more than one brake resistor is used in one and the same arrangement for dissipating electric energy into heat, wherein the different brake resistors may be electrically connected to different sources of electric energy. Due to the effort, which is needed to measure and to determine the temperature, typically only one of the resistors is monitored. However, there might be significant differences of the resistor temperatures.
- If a separate temperature sensor is used to measure the temperature of the brake resistor, the measurement result depends on the heat transfer coefficient of the heat transfer process from the brake resistor to the ambient. Consequently, the measurement result depends on the forced circulation of cooling fluid.

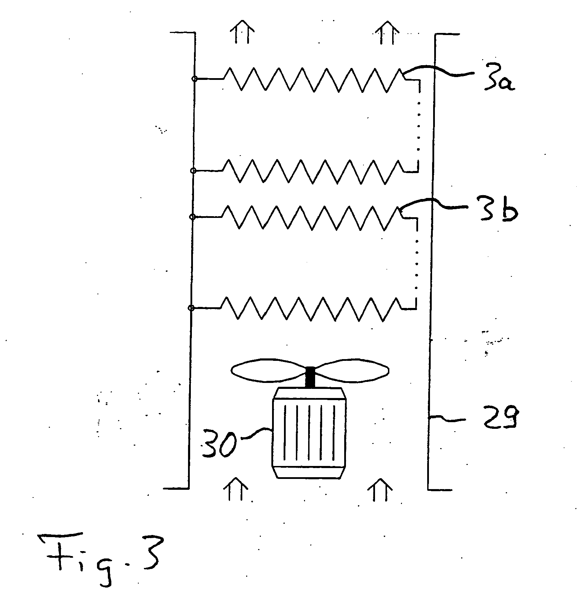

US 2002/0074804 A1 discloses in Figure 3 and the corresponding text in paragraphs 25 to 28 an arrangement comprising a direct current bus which connects an AC to DC converter to a DC to AC converter. A brake resistor is connected across the DC bus. Power in the DC bus can be dissipated in brake resistor by modulation of a switch. A voltage sensor is also connected across the DC bus to produce a DC bus voltage feedback signal which is compared with a brake resistor turn on voltage signal to produce a DC bus error signal which is used to control the modulation of the switch. A brake resistor power limit is used to condition the DC bus error signal. The document disclosure in paragraph 27, first sentence and in Figure 3 (brake resistor temperature feedback) that a brake resistor power limit is based on the measured or estimated temperature of the brake resistor.

DE 102 35 432 A1 discloses a method of performing a diagnosis of an operating state of an electromagnetic drive system. A temperature dependent value of a coil resistance results from a formula containing a temperature coefficient of the electric resistance.

JP10225158 discloses a controller for an induction machine. A temperature rise of a brake resistor is estimated from a regenerative power determined based on a value corresponding to the torque of the induction motor and a detected rotational speed thereof in order to protect the brake resistor.

It is an object of the present invention to provide a method and an arrangement for determining a temperature of a brake resistor which avoid at least one of the disadvantages mentioned above. The method is disclosed in claim 1 and the arrangement in claim 14.

Despite the plurality of current pulses, which occur during operation of the brake resistor, it is proposed to measure the resistor current and a voltage across the resistor and to use the measurement results for the determination of the resistor temperature or for the determination of an equivalent quantity (such as a voltage or a number which is equivalent to the temperature). However, since transient behaviour of the resistor current may influence the measurement results, special care must be taken when the measurements are performed. Therefore, it is proposed to perform the measurements at defined points in time and/or outside of defined intervals. This aspect will be described in more detail below.

In particular in high-power applications, converters (such as AC/DC line converters, DC/DC converters and/or DC/AC motor converters) are used in order to provide electric energy. It is an advantage of the present invention that a voltage sensor for measuring the voltage across the brake resistor (which may be equal to the voltage in a direct current intermediate circuit connected to the converter or converters) is usually present in order to perform other tasks in such applications. For example, measurement values of the voltage are used to control the operation of the converter(s). In addition, a current sensor, which can be used to measure the brake resistor current, might be present for the purpose of monitoring the switch which is used to switch on and off the brake resistor current.

Furthermore, the measurement values may be processed by software which is adapted to this purpose. Therefore, the effort for additional hardware is small. In addition, it is proposed to use software for determining the temperature of the brake resistor from the measurement values. Simple and fast software-implemented algorithms are sufficient to determine the temperature.

The voltage and the resistor current are preferably measured at locations which are thermally decoupled from the brake resistor. Thus, the voltage sensor and the current sensor are not affected by any temperature increase of the brake resistor. Furthermore, a standard material can be used for the brake resistor. Unlike one of the approaches described above, it is preferred to use a material having a comparatively high temperature coefficient, since the precision of the determination result increases with the temperature coefficient. For example, a material with a temperature coefficient equal or greater than 0.0003 /K may be used (e.g. a standard nickel-chrome alloy).

It is a further advantage of the invention that the determination result does not depend on the operation state of any forced circulation which is caused to cool the brake resistor, since the precision of the determination is not affected by the heat transfer process from the brake resistor to its ambient.

In particular, the following is proposed: a method for determining a temperature of a brake resistor, in particular for dissipating kinetic energy of a railroad traction vehicle into heat, wherein

- during operation of the brake resistor, a resistor current carried by the brake resistor is repeatedly switched on and off, so that a plurality of consecutive current pulses are generated, wherein the commencement of each of the pulses is defined by a respective point in time when the resistor current is switched on,
- an electric voltage across the brake resistor is measured during at least one of the current pulses by performing a voltage measurement,
- the resistor current is measured during the at least one of the current pulses by performing a current measurement,
- the current measurement is performed not earlier than the end of a first time interval of defined length after commencement of the pulse,
- the temperature of the brake resistor, or an equivalent quantity, is determined using the electric voltage, the resistor current and a temperature coefficient of the brake resistor.

Instead of the temperature coefficient - or in addition to the temperature coefficient - equivalent information concerning the temperature-dependent behaviour of the brake resistor may be used. The term "brake resistor" includes a combination of brake resistors which may be connected in parallel and/or in series to each other.

The electric voltage across the brake resistor and/or the resistor current may be subject to fluctuations or subject to other alterations during one or more than one of the pulses. In particular, the electric voltage may be the voltage of a direct current intermediate circuit and, consequently, may show the behaviour of a constant voltage with a superimposed fluctuation. Alternatively, the electric voltage may be an alternating voltage, for example a sinusoidal voltage. In this case, the brake resistor may be operated in the manner of phase-control, i.e. the phase angle of the switching time may be varied in order to adjust the electric power dissipated by the brake resistor.

Furthermore, the voltage across the brake resistor is not necessarily identical to the voltage between the two opposite terminals of the brake resistor. Rather, it is sufficient to measure the voltage at the terminals of an electric loop which comprises the brake resistor and possibly other parts and connections. Consequently, an induction voltage may be induced in the loop, when the brake resistor current is switched on.

Since the current measurement is performed not earlier than the end of the first time interval after commencement of the pulse, the adverse effect of inductivities can be excluded. In particular, a time constant may be defined by the quotient of a loop inductance and of a resistance of the brake resistor. The loop inductance is an effective inductance of the brake resistor and of all other parts, devices and connections which carry the resistor current during the current pulses. For this embodiment, it is proposed that the length of the first time interval is at least three times the time constant, preferably at least four times the time constant.

If the voltage across the brake resistor, which is measured (e.g. the voltage of a DC intermediate circuit) is nearly constant, it can be measured earlier than the end of the first time interval.

For example, a control signal for controlling the switching process of switching on the resistor current may be used to control the timing of the measurements. A time delay process (which may be implemented in software) may be started by the control signal. The delay process delays the generation and/or the output of a second signal by the length of the first time interval. Controlled by the generation and/or the output of the second signal, the measurements are performed. E.g., the measurements may be performed by sampling and/or saving (for example in a digital data storage) the respective measurement value.

Alternatively, a blocking signal, which blocks the execution and/or the use of measurements values during the first time interval, may be released and/or cancelled at the end of the first time interval. However, other methods and/or devices may also or alternatively be used to control and the timing of the measurements.

Furthermore, a control method and/or a control device for controlling the generation of the current pulses may be adapted to generate current pulses having a minimum length of at least the length of the first time interval. This will guarantee that the measurements can be performed during any one of the current pulses.

Preferably, the voltage measurement and the current measurement are performed within a second time interval of defined length during the current pulse. For example, the length of the second time interval is defined using information about typical fluctuations of the voltage and/or the current to be measured. With this embodiment, the current measurement and the voltage measurement can be performed one after the other. On the other hand, a precise determination result can be obtained from the measurement results. In particular due this embodiment, it may be sufficient to sample the electric voltage and/or the resistor current once during the current pulse.

In order to determine the temperature of the brake resistor (or the equivalent quantity) the resistance of the brake resistor may be calculated using the electric voltage and the resistor current. For example, the following equation may be used to calculate the resistance:

$$R1 = U / I = R0^* (1 + \alpha^* (\vartheta 1 - \vartheta 0)),$$

Wherein R1 is the resistance of the brake resistor at the temperature $\vartheta 1$ to be determined, wherein R0 is the resistance of the brake resistor at a reference temperature $\vartheta 0$, wherein $\alpha$ is the temperature coefficient of the brake resistor, wherein U is the measured electric voltage across the brake resistor and wherein I is the measured resistor current.

The electric voltage and the resistor current may be measured during a reference current pulse, wherein the brake resistor has a known temperature and/or a defined temperature during the reference current pulse, wherein a reference value is calculated using the measured electric voltage and the measured resistor current and wherein the reference value is used to determine the temperature of the brake resistor. For example, the reference value may be the resistance R0 of the brake resistor at the reference temperature $\vartheta 0$.

In some situations or for some applications, fluctuations of the electric voltage to be measured during the current pulse may result in inaccurate determination result. In particular for this case, it is proposed to repeatedly perform the voltage measurement and the current measurement during a plurality of the pulses, to calculate a mean value which represents measurement results of the plurality of the pulses and to determine the temperature of the brake resistor using the mean value.

As mentioned above, the invention may be used in order to protect the brake resistor from damage. In particular, the measured electric voltage and the measured resistor current may be used to determine a heat and/or a heat power dissipated by the brake resistor. Then, the heat and/or the heat power may be used, for example, to control a forced-cooling arrangement, which is adapted to cool the brake resistor. For example, the forced-cooling arrangement, which is adapted to cool the brake resistor, may be operated, if the resistance of the brake resistor, the temperature of the brake resistor or an equivalent quantity exceeds a first threshold value.

Furthermore, the heat and/or a heat power dissipated by the brake resistor may be adapted and/or limited, if the resistance of the brake resistor, the temperature of the brake resistor or an equivalent quantity exceeds a second threshold value and the first threshold value.

In a further embodiment, a switching process of switching on and/or off the brake resistor current may be blocked, if the resistance of the brake resistor, the temperature of the brake resistor or an equivalent quantity exceeds a third threshold value, the second threshold value and the first threshold value.

In addition, a voltage source for supplying the electric voltage may be disconnected from a switch, if the resistance of the brake resistor, the temperature of the brake resistor or an equivalent quantity exceeds a fourth threshold value, the third threshold value, the second threshold value and the first threshold value, wherein the switch is used to perform the switching process of the resistor current.

Preferably, the first to fourth threshold values have rising values in their consecutive order, i.e. the second threshold value is greater than the first threshold value and so forth.

Furthermore, an arrangement for determining a temperature of a brake resistor, in particular a brake resistor for dissipating kinetic energy of a railroad traction vehicle into heat, may comprise the following:

- a switching device for repeatedly switching on and off a resistor current carried by the brake resistor during operation of the brake resistor, so that a plurality of consecutive current pulses are generated, wherein the commencement of each of the pulses is defined by a respective point in time when the resistor current is switched on,
- a voltage measuring device for measuring an electric voltage across the brake resistor during at least one of the current pulses,
- a current measuring device for measuring the resistor current during the at least one of the current pulses,
- a calculation device adapted to calculate the temperature of the brake resistor, or to calculate an equivalent quantity, wherein the calculation device is connected with an output of the voltage measuring device and with an output of the current measuring device,
- a timing device, wherein the timing device is adapted to control the arrangement so that the current measurement is performed not earlier than the end of a first time interval of defined length after commencement of the at least one of the pulses during which the measurements are performed.

The pulses may be generated in different ways in different embodiments of the invention. In particular, a controllable semiconductor switch, for example an IGBT (Insulated Gate Bipolar Transistor), may be used to switch on and to switch off the resistor current. However, alternative switching devices may be used, such as devices comprising at least one thyristor. In this case, the end of a pulse may be defined by the time when the thyristor becomes nonconductive. Thus, the switching device may or may not actively switch on or switch off resistor current.

A control device may be provided which is connected to the calculation device and is adapted to control the switching device depending on a calculation result of the calculation device.

Alternatively or in addition, the arrangement may comprise a control device which is connected to the calculation device and is adapted to control a main switch depending on a calculation result of the calculation device, wherein the main switch is arranged so that it can disconnect a voltage source for supplying the electric voltage from the switching device.

Alternatively or in addition, the arrangement may comprise a control device which is connected to the calculation device and is adapted to control a forced circulation device depending on a calculation result of the calculation device, wherein the forced circulation device is adapted and arranged to force circulation of a cooling fluid in order to cool the brake resistor.

Examples of the present invention will be described in more detail in the following with a reference to the accompanying drawing. The figures of the drawing show:

Fig. 1     a diagram showing a number of pulses of the resistor current as a function of time,

Fig. 2     an arrangement for transferring electric energy from an energy supply network to a motor of a railroad traction vehicle and vice versa,

Fig. 3     an arrangement for forced cooling of brake resistors and

Fig. 4     a preferred embodiment of an arrangement for determining a temperature of a brake resistor.

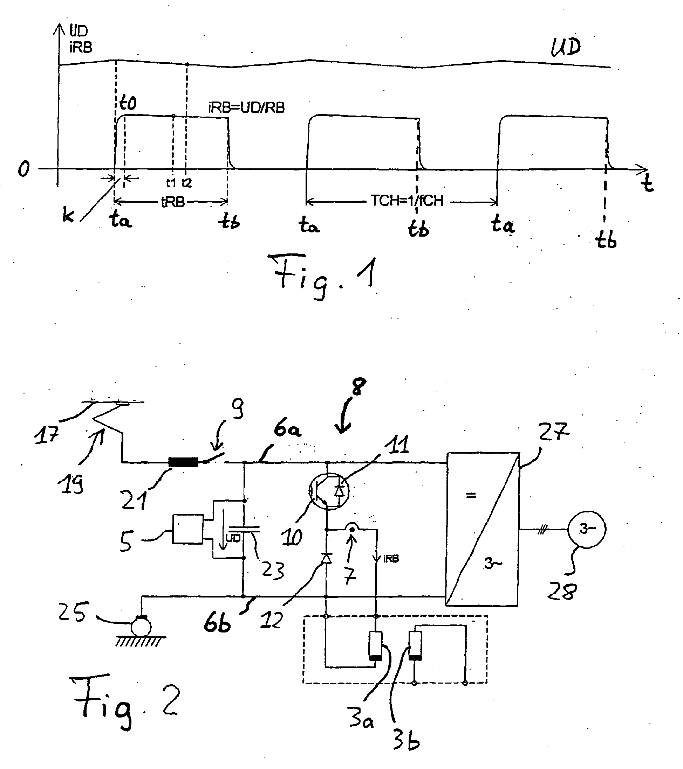

In Fig. 1, three pulses of the brake resistor current iRB as a function of time t can be recognised. Each of the pulses starts at a point in time ta (commencement time), when the resistor current iRB is switched on. In the following, the resistor current iRB rises in the manner of a function $f = q * (1 - \exp(-p * t))$, wherein q and p are positive constants and wherein "exp" denotes an exponential function. In particular, q is the quotient of a voltage UD and of the brake resistor resistance RB, wherein UD is the voltage across the brake resistor. Furthermore, p is the reciprocal of the time constant τRB (see below).

A time interval k after the commencement time ta the resistor current iRB becomes a merely constant function until the resistor current iRB is switched off at time tb. However, the resistor current iRB is subject to fluctuations due to fluctuations of the voltage UD across the brake resistor. The voltage UD as a function of time is also part of the diagram shown in Fig. 1.

The end of the time interval k is marked at time t0 for the pulse on the left hand side. In a preferred embodiment of the method according to the present invention, the length of the time interval k is chosen to be equal to $4 * τRB = 4 * LRB / RB$, wherein τRB is the above mentioned time constant which is equal to the effective inductance LRB of the brake resistor and of other elements on the current path (including the inductance of the loop formed by the path itself) which carry the resistor current during the current pulses divided by the resistance RB of the brake resistor.

Consecutive pulses follow at a frequency fCH = 1/TCH, wherein TCH is the length of the time interval between the commencement time ta of any two consecutive pulses.

During the pulse on the left hand side, the resistor current iRB and the voltage UD across of the resistor are sampled one after the other at time t1 (the current) and at time t2 (the voltage). However, t2 can be earlier than t1. In particular, the voltage measurement can be performed during the time interval k.

In the example shown in Fig. 1, the two points in time t1, t2 are after the end of the time interval k. Furthermore, the time interval between time t1 and time t2 is shorter than a predefined length in order to make sure that the voltage measurement and the current measurement are performed in the same operating state of the brake resistor. Preferably, the measurements are performed during each of the pulses in the same manner.

The arrangement shown in Fig. 2 is connected to an energy supply network 17, for example via a current collector 19 which is connected to a DC voltage line of the energy supply network 17. An inductor 21 and a main switch 9 are connected in series to the current collector 19. By opening the main switch 9, the energy supply network 17 can be electrically decoupled from a DC intermediate circuit 8 of the arrangement. The DC intermediate circuit 8 may comprise one or more than one capacitor 23 which connect DC lines 6a, 6b of the direct current intermediate circuit 8. The main switch 9 is directly connected to the line 6a. The other line 6b is connected to ground potential via a ground potential contactor 25. A converter 27 (which is a three-phase DC/AC converter in the example shown) is connected to the lines 6a, 6b. The converter 27 is adapted to supply electric energy via three AC lines to a motor 28. The motor 28 may be a traction motor of a railroad traction vehicle, such as a tram.

During operation of the motor 28, it may generate electric energy which can be fed back into the energy supply network 17. However, in particular during a braking process of the vehicle, it might not be possible to feed back the whole amount of the generated electric energy. For this purpose, a brake resistor 3a is connected between the lines 6a, 6b via a chopper arrangement. The chopper arrangement comprises an electronic switch 10 (such as an IGBT), wherein a diode 11 is arranged anti-parallel to the switch 10. A further diode 12 is connected in series to the switch 10 and to the diode 11, so that the series connection connects the lines 6a, 6b. A first side of the brake resistor 3a is connected to an electric connection between the diode 12 and the switch 10. The opposite side of the brake resistor 3a is connected to the line 6b. By switching on and off the switch 10, the brake resistor current is switched on and off, so that the current pulses shown in Fig. 1 are generated, for example.

A current sensor 7 is arranged in the connection between the switch 10 and the brake resistor 3a. Furthermore, a voltage sensor 5 is arranged so that it can measure the voltage between the lines 6a, 6b. This voltage is equal to the voltage across the brake resistor 3a, if the switch 10 is switched on and if any inductivity in the path of the resistor current does not affect the measurement. Since the measurement is performed after time interval k such effects can be neglected. According to a preferred embodiment, other resistances in the path of the resistor current are chosen, so that such resistances can be neglected as well compared to the resistance of the brake resistor.

A further brake resistor 3b is shown in Fig. 2. The brake resistors 3a, 3b are combined in an cooling arrangement for commonly cooling the brake resistors. A rectangular frame of dashed lines surrounds the cooling arrangement in Fig. 2. The further brake resistor 3b may be connected to a further converter-arrangement in a similar manner as shown for the first brake resistor 3a in Fig. 2. The cooling arrangement is shown in Fig. 3 in detail. The brake resistors 3a, 3b are arranged in an air passage 29 having an air inlet (at the bottom of Fig. 3) and having an air outlet (at the top of Fig. 3). A ventilator 30 is arranged in the air passage 29, next to the air inlet. Measurement results of the brake resistor current of brake resistor 3b and measurement results of the voltage across the brake resistor 3b may also be obtained in the same manner as for brake resistor 3a and the ventilator 30 may be operated in dependence on the measurement results of the brake resistor 3b and in dependence on the measurement results of brake resistor 3a.

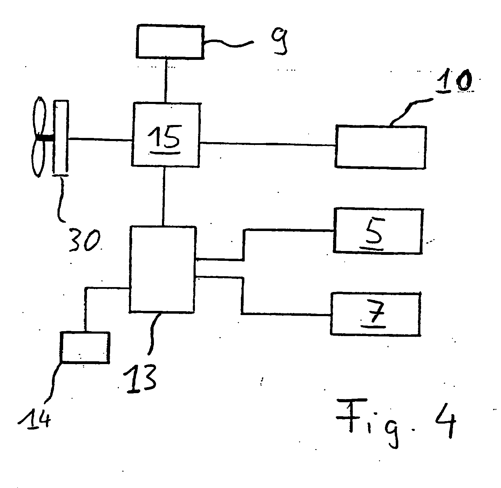

The arrangement for determining the temperature of the brake resistor and for controlling the operation of the brake resistor shown in Fig. 4 comprises the voltage sensor 5 and the current sensor 7 of the arrangement shown in Fig. 2. The sensors 5, 7 are connected to a calculation device which may be part of a central control unit for controlling the operation of the arrangement shown in Fig. 2, including the converter 27. A timing device 14 is provided which is connected to the calculation device 13. In an alternative arrangement, the timing device may directly be connected to at least one of the measurement sensors 5, 7 and/or may be part of the calculation device 13. A control device 15 for controlling the operation of the brake resistor is connected to the calculation device 13. Furthermore, a ventilator 30 for cooling the brake resistor and the main switch 9 are connected to the control device 15 so that the ventilator 30 and the main switch 9 can be controlled by the control device 15.

Preferably, the calculation device 13, the timing device 14 and/or of the control device 15 may be realised by software.

The operation of the arrangement of Fig. 4 may be as follows. Measurement signals from the current sensor 7 and from the voltage sensor 5 are permanently generated or are repeatedly generated and are transferred to the calculation device 13. In dependence on a trigger signal generated by and transferred from the timing device 14, the calculation device 13 samples the measurement signals in order to obtain corresponding measurement values. Using the measurement values and using additional information about the thermal behaviour of the brake resistor, the calculation device 13 determines the temperature of the brake resistor. In particular, the timing device 14 generates a first trigger signal in order to trigger the sampling of the voltage measurement signal (or of the current measurement signal), and generates a second trigger signal in order to trigger the sampling of the current measurement signal (or of the voltage measurement signal). The first and the second trigger signals are generated and/or transferred to the calculation device 13 not earlier than the defined time interval (interval k in the example of Fig. 1) after commencement of a current pulse.

Furthermore, the calculation device 13 calculates the power (rate) of electric energy which is dissipated by the brake resistor into heat. If certain defined threshold values are exceeded, the calculation device 13 outputs a corresponding control signal to the control device 15. Depending on a these control signals, the control device 15 controls the operation of the switch 10 (in order to control the dissipated heat power), the operation of the ventilator 30 (in order to control the cooling of the brake resistor) and the operation of the main switch 9 (in order to switch off the whole arrangement, if necessary and, for example, if the switch 10 is defect).

In an alternative arrangement, the calculation device 13 and the control device 15 may be part of the same data processing unit.

In the following, an example for determining the temperature of the brake resistor and for controlling its operation is described.

In particular, this example relates to railroad vehicles which collect the electric energy from an electric wire and in which an electric braking procedure is implemented. An example for such a vehicle is the arrangement of Fig. 2. Electric energy, which is generated during braking, can be fed back into the energy supply network or can be dissipated into heat using the brake resistor. Any combination of feeding back and of dissipating into heat is possible. For example, the dissipated heat power can be controlled by adapting the pulse width of the current pulses. Corresponding arrangements can be used with diesel-electric traction vehicles and with traction vehicles that are connected to an alternating current energy supply network.

The temperature of the brake resistor may be determined in the following manner: During a current pulse, the brake resistor current iRB and the voltage UD across the brake resistor are measured. The corresponding resistance RBakt of the brake resistor is defined by

$$RBakt = UD(t2) \: / \: iRB(t1),$$

wherein t2, t1 are the respective times of the measurements during the same current pulse (see for example Fig. 1). Preferably, these measurements are performed as close as possible to each other. The maximum time difference between the measurements, which can be tolerated, depends on the fluctuations of the voltage (and thereby depends on the capacity in the arrangement, in particular of the capacitor 23, depends on the resistance of the brake resistor and depends on the repetition frequency of the current pulses). The equation, which describes the relation between the resistance RBakt and the temperature, was introduced above. The equation can be written as follows:

$$\vartheta \: RBakt = \: \vartheta \: RBref + ((RBakt / \: RBref) \: -1) \: / \: \alpha$$

wherein $\vartheta$RBakt is the temperature to be determined, wherein $\vartheta$RBref is the reference temperature, wherein RBref is the corresponding resistance at the reference temperature $\vartheta$RBref and wherein $\alpha$ is the temperature coefficient which can be assumed to be constant in many cases. The resistance RBref may be determined by measuring the voltage and the current at a known (e.g. by measurement) temperature and/or after a long period of time during which the brake resistor was switched off. For example, a test current pulse may be generated in order to perform the reference measurements. The test current pulse may be short and/or the measurement may be performed immediately after the end of the first defined time interval which starts at the commencement of the current pulse. In addition or alternatively, such test pulses may be performed for another purpose: If the brake resistor has not been switched on for a long period of time, such a test pulse may repeatedly be performed and the temperature may be determined by evaluating the current and the voltage measurement values in order to monitor the temperature. In particular in this case, the test pulses should be as short as possible (e.g. the measurements should be performed immediately after the end of the first time interval k and the test pulse should be terminated immediately after the measurements).

For example, the brake resistor current iRB may be in the range from 200 A to 1.5kA for a high-power application with a direct voltage UD in the DC intermediate circuit in the range from 2.5 kV to 4 kV.

In particular if the effect of the fluctuations of the voltage between the measurement of the voltage and the measurement of the brake resistor current cannot be neglected, it is proposed to evaluate a plurality of measurement results taken during a plurality of current pulses and to calculate a mean value of the brake resistor resistance and of the temperature according to the following equations:

$$RBakt = \frac{1}{N} \sum_N RBakt$$

$$\vartheta RBakt = \frac{1}{N} \sum_N \vartheta RBakt \,,$$

wherein N is the number of measurements of the voltage which are evaluated.

For determination of the heat power PRB dissipated by the brake resistor, the product of the measured voltage UD and of the measured current iRB can be used and the average power $PRB_{\_mean}$ related to each pulse can be calculated as follows:

$$PRB_{\_mean} = uD(t2) * iRB(t1) * tRB * fCH,$$

wherein tRB is the duration of the current pulse and wherein fCH is the repetition frequency of the pulses (see Fig. 1).

Furthermore, it is proposed that the following expression is calculated in order to determine whether a forced-circulation device for cooling of the brake resistor, such as the ventilator 30, is to be switched on:

$$WRB = \Sigma \, t*(PRB\_mean - PRB\_cont),$$

wherein PRB_cont is the maximum heat power, which can be dissipated by the brake resistor without forced circulation. The sign $\Sigma$ denotes the sum of the expression ($PRB_{\_mean}$ - $PRB_{\_cont}$) for a number of consecutive current pulses multiplied by the time t. If the sum becomes negative, it is set to zero. The forced circulation is switched on, if the calculated energy exceeds a threshold value.

**Claims**

1. A method for determining a temperature of a brake resistor (3), in particular a brake resistor (3) for dissipating kinetic energy of a railroad traction vehicle into heat, wherein

   • during operation of the brake resistor (3), a resistor current carried by the brake resistor (3) is repeatedly switched on and off, so that a plurality of consecutive current pulses are generated, wherein the commencement of each of the pulses is defined by a respective point in time (ta) when the resistor current is switched on,
   • an electric voltage across the brake resistor (3) is measured during at least one of the current pulses by performing a voltage measurement,
   • the resistor current is measured during the at least one of the current pulses by performing a current measurement,
   • the current measurement is performed not earlier than the end (at time t0) of a first time interval (ta;t0) of defined length (k) after commencement of the pulse at the respective point in time (ta),
   • the temperature of the brake resistor (3), or an equivalent quantity, is determined using the electric voltage, the resistor current and a temperature coefficient - or equivalent information - of the brake resistor (3).

2. The method of claim 1, wherein the voltage measurement and the current measurement are performed within a second time interval of defined length during the current pulse.

3. The method of one of the preceding claims, wherein a time constant is defined by the quotient of a loop inductance and of a resistance of the brake resistor (3), wherein the loop inductance is an effective inductance of the brake resistor (3) and of all other parts, devices and connections which carry the resistor current during the current pulses and wherein the length of the first time interval is at least three times the time constant, preferably at least four times the time constant.

4. The method of one of the preceding claims, wherein a resistance of the brake resistor (3) is calculated using the electric voltage and the resistor current.

5. The method of one of the preceding claims, wherein the electric voltage and/or the resistor current is/are sampled once during the current pulse.

6. The method of one of the preceding claims, wherein the electric voltage and the resistor current are measured one after the other during the current pulse.

7. The method of one of the preceding claims, wherein the electric voltage and the resistor current are measured during a reference current pulse, wherein the brake resistor (3) has a known temperature and/or a defined temperature during the reference current pulse, wherein a reference value is calculated using the measured electric voltage and the measured resistor current and wherein the reference value is used to determine the temperature of the brake resistor (3).

8. The method of one of the preceding claims, wherein the voltage measurement and the current measurement are repeatedly performed during a plurality of the pulses, a mean value is calculated which represents measurement results of the plurality of the pulses and wherein the temperature of the brake resistor (3) is determined using the mean value.

9. The method of one of the preceding claims, wherein the measured electric voltage and the measured resistor current are used to determine a heat and/or a heat power dissipated by the brake resistor (3) and wherein the heat and/or the heat power is used to control a forced-cooling arrangement, which is adapted to cool the brake resistor (3).

10. The method of one of the preceding claims, wherein a forced-cooling arrangement, which is adapted to cool the brake resistor (3), is operated, if the resistance of the brake resistor (3), the temperature of the brake resistor (3) or an equivalent quantity exceeds a first threshold value.

11. The method of the preceding claim, wherein a heat and/or a heat power dissipated by the brake resistor (3) is adapted and/or limited, if the resistance of the brake resistor (3), the temperature of the brake resistor (3) or an equivalent quantity exceeds a second threshold value and the first threshold value.

12. The method of the preceding claim, wherein a switching process of switching on and/or off the brake resistor current is blocked, if the resistance of the brake resistor (3), the temperature of the brake resistor (3) or an equivalent quantity exceeds a third threshold value, the second threshold value and the first threshold value.

13. The method of the preceding claim, wherein a voltage source for supplying the electric voltage is disconnected from a switch, if the resistance of the brake resistor (3), the temperature of the brake resistor (3) or an equivalent quantity exceeds a fourth threshold value, the third threshold value, the second threshold value and the first threshold value, wherein the switch is used to perform the switching process.

14. An arrangement for determining a temperature of a brake resistor (3), in particular a brake resistor (3) for dissipating kinetic energy of a railroad traction vehicle into heat, wherein the arrangement comprises:

   • a switching device (10) for repeatedly switching on and off a resistor current carried by the brake resistor (3) during operation of the brake resistor (3), so that a plurality of consecutive current pulses are generated, wherein the commencement of each of the pulses is defined by a respective point in time (ta) when the resistor current is switched on,
   • a voltage measuring device (5) for measuring an electric voltage across the brake resistor (3) during at least one of the current pulses,
   • a current measuring device (7) for measuring the resistor current during the at least one of the current pulses,
   • a calculation device (13) adapted to calculate the temperature of the brake resistor (3), or to calculate an equivalent quantity, wherein the calculation device (13) is connected with an output of the voltage measuring device (5) and with an output of the current measuring device (7),

• a timing device (14), wherein the timing device (14) is adapted to control the arrangement so that the current measurement is performed not earlier than the end of a first time interval (ta;t0) of defined length (k) after commencement of the at least one of the pulses during which the measurements are performed.

15. The arrangement of claim 14, comprising a control device (15) which is connected to the calculation device (13) and is adapted to control the switching device (10) depending on a calculation result of the calculation device (13).

16. The arrangement of one of the two preceding claims, comprising a control device (15) which is connected to the calculation device (13) and is adapted to control a main switch (9) depending on a calculation result of the calculation device (13), wherein the main switch (9) is arranged so that it can disconnect a voltage source for supplying the electric voltage from the switching device (10).

17. The arrangement of one of the three preceding claims, comprising a control device (15) which is connected to the calculation device (13) and is adapted to control a forced circulation device (30) depending on a calculation result of the calculation device (13), wherein the forced circulation device (30) is adapted and arranged to force circulation of a cooling fluid in order to cool the brake resistor (3).

**Patentansprüche**

1. Verfahren zum Bestimmen einer Temperatur eines Bremswiderstandes (3), insbesondere eines Bremswiderstandes (3) zum Dissipieren von kinetischer Energie eines Schienenweg-Zugfahrzeugs in Wärme, wobei

- während eines Betriebes des Bremswiderstandes (3) ein Widerstandsstrom, der durch den Bremswiderstandes (3) fließt, wiederholt ein- und ausgeschaltet wird, so dass eine Mehrzahl von aufeinander folgenden Strompulsen erzeugt wird, wobei der Beginn von jedem der Pulse durch einen entsprechenden Zeitpunkt (ta), wenn der Widerstandsstrom eingeschaltet wird, definiert ist,
- eine über den Bremswiderstand (3) abfallende elektrische Spannung während zumindest einem der Strompulse gemessen wird, indem eine Spannungsmessung durchgeführt wird,
- der Widerstandsstrom während dem zumindest einen der Strompulse gemessen wird, indem eine Strommessung durchgeführt wird,
- die Strommessung nicht vor dem Ende (zum Zeitpunkt t0) eines ersten Zeitintervalls (ta; t0) definierter Länge (k) nach dem Beginn des Pulses zu dem entsprechenden Zeitpunkt (ta) durchgeführt wird,
- die Temperatur des Bremswiderstandes (3), oder eine äquivalente Größe unter Verwendung der elektrischen Spannung, des Widerstandsstroms und eines Temperaturkoeffizienten - oder äquivalenter Informationen - des Bremswiderstandes (3) bestimmt wird.

2. Verfahren nach Anspruch 1, wobei die Spannungsmessung und die Strommessung innerhalb eines zweiten Zeitintervalls definierter Länge während des Strompulses durchgeführt werden.

3. Verfahren nach einem der vorhergehenden Ansprüche, wobei durch den Quotienten einer Schleifeninduktivität und eines Widerstandes des Bremswiderstandes (3) eine Zeitkonstante definiert wird, wobei die Schleifeninduktivität eine wirksame Induktivität des Bremswiderstandes (3) und aller anderen Teile, Einrichtungen und Verbindungen, die den Widerstandsstrom während der Strompulse führen, ist und wobei die Länge des ersten Zeitintervalls zumindest das dreifache der Zeitkonstante, vorzugsweise zumindest das vierfache der Zeitkonstante ist.

4. Verfahren nach einem der vorhergehenden Ansprüche, wobei ein Widerstand des Bremswiderstandes (3) unter Verwendung der elektrischen Spannung und des Widerstandsstroms berechnet wird.

5. Verfahren nach einem der vorhergehenden Ansprüche, wobei die elektrische Spannung und/oder der Widerstandsstrom ein mal während dem Strompuls aufgenommen wird/werden.

6. Verfahren nach einem der vorhergehenden Ansprüche, wobei die elektrische Spannung und der Widerstandsstrom einer nach dem anderen während des Strompulses gemessen werden.

7. Verfahren nach einem der vorhergehenden Ansprüche, wobei die elektrische Spannung und der Widerstandsstrom während eines Referenzstrompulses gemessen werden, wobei der Bremswiderstand (3) eine bekannte Temperatur und/oder eine definierte Temperatur während des Referenzstrompulses hat, wobei ein Referenzwert unter Verwendung der gemessenen elektrischen Spannung und des gemessenen Widerstandsstroms berechnet wird und wobei der Referenzwert verwendet wird, um die Temperatur des Bremswiderstandes (3) zu bestimmen.

8. Verfahren nach einem der vorhergehenden Ansprüche, wobei die Spannungsmessung und die Strommessung während einer Mehrzahl der Pulse wiederholt durchgeführt werden, ein Mittelwert berechnet wird, der Messergebnisse der Mehrzahl der Pulse repräsentiert und wobei die Temperatur des Bremswiderstandes (3) unter Verwendung des Mittelwerts bestimmt wird.

9. Verfahren nach einem der vorhergehenden Ansprüche, wobei die gemessene elektrische Spannung und der gemessene Widerstandsstrom verwendet werden, um eine Wärme und/oder eine Wärmeleistung, die durch den Bremswiderstand (3) dissipiert wird, zu bestimmen und wobei die Wärme und/oder die Wärmeleistung verwendet wird, um eine Zwangskühlungs-Anordnung, die ausgestaltet ist, den Bremswiderstand (3) zu kühlen, zu steuern.

10. Verfahren nach einem der vorhergehenden Ansprüche, wobei die Zwangskühlungs-Anordnung, die ausgestaltet ist, den Bremswiderstand (3) zu kühlen, betrieben wird, falls der Widerstand des Bremswiderstandes (3), die Temperatur des Bremswiderstandes (3) oder eine äquivalente Größe einen ersten Grenzwert überschreitet.

11. Verfahren nach dem vorhergehenden Anspruch, wobei eine Wärme und/oder eine Wärmeleistung, die durch den Bremswiderstand (3) dissipiert wird, angepasst und/oder begrenzt wird, falls der Widerstand des Bremswiderstandes (3), die Temperatur des Bremswiderstandes (3) oder eine äquivalente Größe einen zweiten Grenzwert und den ersten Grenzwert überschreitet.

12. Verfahren nach dem vorhergehenden Anspruch, wobei ein Schaltprozess, mit dem der Bremswiderstandsstrom eingeschaltet und/oder ausgeschaltet wird, blockiert wird, falls der Widerstand des Bremswiderstandes (3), die Temperatur des Bremswiderstandes (3) oder eine äquivalente Größe einen dritten Grenzwert, den zweiten Grenzwert und den ersten Grenzwert überschreitet.

13. Verfahren nach dem vorhergehenden Anspruch, wobei eine Spannungsquelle zum Bereitstellen der elektrischen Spannung von einem Schalter getrennt wird, falls der Widerstand des Bremswiderstandes (3), die Temperatur des Bremswiderstandes (3) oder eine äquivalente Größe einen vierten Grenzwert, den dritten Grenzwert, den zweiten Grenzwert und den ersten Grenzwert überschreitet, wobei der Schalter dazu verwendet wird, den Schaltprozess durchzuführen.

14. Anordnung zum Bestimmen einer Temperatur eines Bremswiderstandes (3), insbesondere eines Bremswiderstandes (3) zum Dissipieren kinetischer Energie eines Schienenweg-Zugfahrzeugs in Wärme, wobei die Anordnung aufweist:

   - eine Schalteinrichtung (10) zum wiederholten Einschalten und Ausschalten eines Widerstandsstroms, der von dem Bremswiderstand (3) während des Betriebes des Bremswiderstandes (3) geführt wird, so das eine Mehrzahl von aufeinander folgenden Strompulsen erzeugt wird, wobei der Beginn von jedem der Pulse durch einen entsprechenden Zeitpunkt (ta) definiert ist, wenn der Widerstandsstrom eingeschaltet wird,
   - eine Spannungs-Messeinrichtung (5) zum Messen einer elektrischen Spannung, die über den Bremswiderstand (3) während zumindest einem der Strompulse abfällt,
   - eine Strom-Messeinrichtung (7) zum Messen des Widerstandsstromes während dem zumindest einem der Strompulse,
   - eine Berechnungseinrichtung (13), die ausgestaltet ist, die Temperatur des Bremswiderstandes (3) zu berechnen oder eine äquivalente Größe zu berechnen, wobei die Berechnungseinrichtung (13) mit einem Ausgang der Spannungs-Messeinrichtung (5) verbunden ist und mit einem Ausgang der Strom-Messeinrichtung (7) verbunden ist,
   - eine Zeitsteuerungseinrichtung (14), wobei die Zeitsteuerungseinrichtung (14) ausgestaltet ist, die Anordnung so zu steuern, dass die Strommessung nicht vor dem Ende eines ersten Zeitintervalls (ta; t0) definierter Länge (k) nach dem Beginn von dem zumindest einen der Pulse, während dem die Messungen durchgeführt werden, durchgeführt wird.

15. Anordnung nach Anspruch 14, wobei die Anordnung eine Steuereinrichtung (15) aufweist, die mit der Berechnungseinrichtung (13) verbunden ist und die ausgestaltet ist, die Schalteinrichtung (10) abhängig von einem Berechnungsergebnis der Berechnungseinrichtung (13) zu steuern.

**16.** Anordnung nach einem der zwei vorhergehenden Ansprüche, wobei die Anordnung eine Steuereinrichtung (15) aufweist, die mit der Berechnungseinrichtung (13) verbunden ist und die ausgestaltet ist, einen Hauptschalter (9) abhängig von einem Berechnungsergebnis der Berechnungseinrichtung (13) zu steuern, wobei der Hauptschalter (9) so angeordnet ist, dass er eine Spannungsquelle zum Bereitstellen der elektrischen Spannung von der Schalteinrichtung (10) trennen kann.

**17.** Anordnung nach einem der drei vorhergehenden Ansprüche, wobei die Anordnung eine Steuereinrichtung (15) aufweist, die mit der Berechnungseinrichtung (13) verbunden ist und die ausgestaltet ist, eine Zwangszirkulationseinrichtung (30) abhängig von einem Berechnungsergebnis der Berechnungseinrichtung (13) zu steuern, wobei die Zwangszirkulationseinrichtung (30) ausgestaltet und angeordnet ist, ein Kühlfluid zwangsweise zu zirkulieren, um den Bremswiderstand (3) zu kühlen.

**Revendications**

**1.** Procédé destiné à déterminer une température d'une résistance de frein (3), en particulier une résistance de frein (3) destinée à dissiper une énergie cinétique d'un véhicule de traction de chemin de fer en chaleur, dans lequel :

- au cours du fonctionnement de la résistance de frein (3), un courant de résistance transporté par la résistance de frein (3) est allumé et éteint à plusieurs reprises, de sorte qu'une pluralité d'impulsions de courant consécutives soient générées, dans lequel le début de chacune des impulsions est défini par un instant respectif (ta) lorsque le courant de résistance est allumé,
- une tension électrique à travers la résistance de frein (3) est mesurée au cours d'au moins une des impulsions de courant en réalisant une mesure de tension,
- le courant de résistance est mesuré au cours de l'au moins une des impulsions de courant en réalisant une mesure de courant,
- la mesure de courant n'est pas réalisée avant la fin (à l'instant t0) d'un premier intervalle temporel (ta ; t0) de longueur définie (k) après le début de l'impulsion à l'instant respectif (ta),
- la température de la résistance de frein (3), ou une quantité équivalente, est déterminée en utilisant la tension électrique, le courant de résistance et un coefficient de température - ou une information équivalente - de la résistance de frein (3).

**2.** Procédé selon la revendication 1, dans lequel la mesure de tension et la mesure de courant sont réalisées au sein d'un second intervalle temporel de longueur définie au cours de l'impulsion de courant.

**3.** Procédé selon l'une des revendications précédentes, dans lequel une constante temporelle est définie par le quotient d'une inductance boucle et d'une résistance de la résistance de frein (3), dans lequel l'inductance boucle est une inductance effective de la résistance de frein (3) et de toutes les autres parties, tous les autres dispositifs et toutes les autres connexions qui transportent le courant de résistance au cours des impulsions de courant et dans lequel la longueur du premier intervalle temporel est au moins trois fois la constante temporelle, de préférence au moins quatre fois la constante temporelle.

**4.** Procédé selon l'une des revendications précédentes, dans lequel une résistance de la résistance de frein (3) est calculée en utilisant la tension électrique et le courant de résistance.

**5.** Procédé selon l'une des revendications précédentes, dans lequel la tension électrique et/ou le courant de résistance est/sont échantillonné(e)s une fois au cours de l'impulsion de courant.

**6.** Procédé selon l'une des revendications précédentes, dans lequel la tension électrique et le courant de résistance sont mesurés l'un après l'autre au cours de l'impulsion de courant.

**7.** Procédé selon l'une des revendications précédentes, dans lequel la tension électrique et le courant de résistance sont mesurés au cours d'une impulsion de courant de référence, dans lequel la résistance de frein (3) possède une température connue et/ou une température définie au cours de l'impulsion de courant de référence, dans lequel une valeur de référence est calculée en utilisant la tension électrique mesurée et le courant de résistance mesuré et dans lequel la valeur de référence est utilisée pour déterminer la température de la résistance de frein (3).

**8.** Procédé selon l'une des revendications précédentes, dans lequel la mesure de tension et la mesure de courant sont réalisées à plusieurs reprises au cours d'une pluralité des impulsions, une valeur moyenne est calculée qui représente des résultats de mesure de la pluralité des impulsions et dans lequel la température de la résistance de frein (3) est déterminée en utilisant la valeur moyenne.

9. Procédé selon l'une des revendications précédentes, dans lequel la tension électrique mesurée et le courant de résistance mesuré sont utilisés pour déterminer une chaleur et/ ou une puissance calorifique dissipée(s) par la résistance de frein (3) et dans lequel la chaleur et/ou la puissance calorifique est/sont utilisée(s) pour commander un agencement de refroidissement forcé, qui est adapté pour refroidir la résistance de frein (3).

10. Procédé selon l'une des revendications précédentes, dans lequel un agencement de refroidissement forcé, qui est adapté pour refroidir la résistance de frein (3), est mis en marche, si la résistance de la résistance de frein (3), la température de la résistance de frein (3) ou une quantité équivalente dépasse une première valeur seuil.

11. Procédé selon la revendication précédente, dans lequel une chaleur et/ ou une puissance calorifique dissipée(s) par la résistance de frein (3) est/sont adaptée(s) et/ou limitée(s), si la résistance de la résistance de frein (3), la température de la résistance de frein (3) ou une quantité équivalente dépasse une deuxième valeur seuil et la première valeur seuil.

12. Procédé selon la revendication précédente, dans lequel un procédé de commutation consistant à allumer et/ ou éteindre le courant de résistance de frein est bloqué, si la résistance de la résistance de frein (3), la température de la résistance de frein (3) ou une quantité équivalente dépasse une troisième valeur seuil, la deuxième valeur seuil et la première valeur seuil.

13. Procédé selon la revendication précédente, dans lequel une source de tension destinée à fournir la tension électrique est déconnectée d'un commutateur, si la résistance de la résistance de frein (3), la température de la résistance de frein (3) ou une quantité équivalente dépasse une quatrième valeur seuil, la troisième valeur seuil, la deuxième valeur seuil et la première valeur seuil, dans lequel le commutateur est utilisé pour réaliser le procédé de commutation.

14. Agencement destiné à déterminer une température d'une résistance de frein (3), en particulier une résistance de frein (3) destinée à dissiper une énergie cinétique d'un véhicule de traction de chemin de fer en chaleur, dans lequel l'agencement comprend :

   - un dispositif de commutation (10) destiné à allumer et éteindre à plusieurs reprises un courant de résistance transporté par la résistance de frein (3) au cours du fonctionnement de la résistance de frein (3), de sorte qu'une pluralité d'impulsions de courant consécutives soient générées, dans lequel le début de chacune des impulsions est défini par un instant respectif (ta) lorsque le courant de résistance est allumé,
   - un dispositif de mesure de tension (5) destiné à mesurer une tension électrique à travers la résistance de frein (3) au cours d'au moins une des impulsions de courant,
   - un dispositif de mesure de courant (7) destiné à mesurer le courant de résistance au cours de l'au moins une des impulsions de courant,
   - un dispositif de calcul (13) adapté pour calculer la température de la résistance de frein (3), ou pour calculer une quantité équivalente, dans lequel le dispositif de calcul (13) est connecté à une sortie du dispositif de mesure de tension (5) et à une sortie du dispositif de mesure de courant (7),
   - un dispositif de chronométrage (14), dans lequel le dispositif de chronométrage (14) est adapté pour commander l'agencement de sorte que la mesure de courant ne soit pas réalisée avant la fin d'un premier intervalle temporel (ta ; t0) de longueur définie (k) après le début de l'au moins une des impulsions au cours de laquelle les mesures sont réalisées.

15. Agencement selon la revendication 14, comprenant un dispositif de commande (15) qui est connecté au dispositif de calcul (13) et est adapté pour commander le dispositif de commutation (10) suivant un résultat de calcul du dispositif de calcul (13).

16. Agencement selon l'une des deux revendications précédentes, comprenant un dispositif de commande (15) qui est connecté au dispositif de calcul (13) et est adapté pour commander un commutateur principal (9) suivant un résultat de calcul du dispositif de calcul (13), dans lequel le commutateur principal (9) est agencé de sorte qu'il puisse déconnecter une source de tension destinée à fournir la tension électrique à partir du dispositif de commutation (10).

17. Agencement selon l'une des trois revendications précédentes, comprenant un dispositif de commande (15) qui est connecté au dispositif de calcul (13) et est adapté pour commander un dispositif de circulation forcée (30) suivant un résultat de calcul du dispositif de calcul (13), dans lequel le dispositif de circulation forcée (30) est adapté et agencé pour forcer la circulation d'un fluide de refroidissement afin de refroidir la résistance de frein (3).

Fig. 1

Fig. 2

Fig. 3

Fig. 4

**EP 1 610 454 B1**

**REFERENCES CITED IN THE DESCRIPTION**

**Patent documents cited in the description**

- US 20020074804 A1
- DE 10235432 A1
- JP 10225158 B